# EUROPEAN PATENT SPECIFICATION

(11) **EP 2 471 759 B1**
(45) Date of publication and mention of the grant of the patent: **24.10.2018**
(21) Application number: 11195890.6
(22) Date of filing: 28.12.2011
(51) Int. Cl.: C03C 23/00, C03B 23/02, C03B 29/08, C03B 29/12, C03B 35/24, H05B 6/60, H05B 6/62, C03B 35/18, C03B 27/04, C03B 27/044

(54) **Apparatus and method for manufacturing patterned tempered glass**
Vorrichtung und Verfahren zur Herstellung von strukturiertem gehärtetem Glas
Appareil et procédé de fabrication de verre trempé modelé

(30) Priority: 30.12.2010 KR 20100139260
(43) Date of publication of application: 04.07.2012
(73) Proprietor: Corning Precision Materials Co., Ltd., Asan-si, Chungcheongnam-do 31452 (KR)
(72) Inventor: Lee, Hoikwan, Asan-si ChungCheongNam-Do 336-841 (KR); Cho, Seo-Yeong, Asan-si ChungCheongNam-Do 336-841 (KR); Kizevich, Gennady, Asan-si ChungCheongNam-Do 336-841 (KR); Kwon, YoonYoung, Asan-si ChungCheongNam-Do 336-841 (KR); Park, Kyungwook, Asan-si ChungCheongNam-Do 336-841 (KR); Yoon, Kyungmin, Asan-si ChungCheongNam-Do 336-841 (KR); Lee, Jongsung, Asan-si ChungCheongNam-Do 336-841 (KR); Choi, Jaeyoung, Asan-si ChungCheongNam-Do 336-841 (KR)
(74) Representative: Gulde & Partner

(56) References cited:
- EP-A2- 0 761 613
- US-A- 2 068 799
- US-A- 4 746 347
- US-A- 5 827 345
- US-B1- 6 408 649

## Description

### BACKGROUND OF THE PRESENT INVENTION

### Field of the present invention

The present invention relates to an apparatus and a method for manufacturing tempered glass, and more particularly, to an apparatus and a method for manufacturing patterned tempered glass, in which a pattern is formed on the surface of a heated glass substrate, and in which tempering is more completely realized by maximizing the difference in temperature between the inner and outer portions of the glass substrate and by rapid cooling.

### Description of Related Art

Apparatuses and methods for manufacturing tempered glass are disclosed e.g. in US 4,746,347, US 5,827,345, EP 0 761 613 A2, US 6,408,649 B1 and US 2,068,799.

In general, tempered glass has resistance to pressure and changes in temperature that are superior to those of normal glass substrates, and, when broken, shatters into small fragments having the form of particles, thereby making it less likely to create a hazard due to shards. Therefore, tempered glass is widely used for solar cells, display devices, automobiles, buildings and the like.

A glass substrate is heated up to a temperature ranging from about 600°C to about 900°C in a heating chamber, and is then carried on a carriage into a cooling chamber, where air is ejected through air nozzles of an air cooling apparatus from above and below the heated glass substrate, so that the surface temperature of the heated glass rapidly drops to a temperature ranging from 200°C to 400°C. Consequently, compressive strain is caused to remain in the surface layer of the heated glass, thereby manufacturing tempered glass, the strength of which is increased so as to be superior to that of normal glass substrates.

However, the apparatus for manufacturing tempered glass of the related art is limited in its ability to increase the strength of the tempered glass, since it performs cooling using the air cooling apparatus, which takes in ambient air and then directly ejects it onto the glass. The strength of the tempered glass increases when the glass is cooled more rapidly. In the related art, however, the heated glass is slowly cooled, since it is cooled using air that is at room temperature. Consequently, the tempering is incompletely carried out, thereby increasing the defective fraction of products. Moreover, this phenomenon becomes more serious in the summer when the temperature of the ambient air is higher.

Among types of the tempered glass, for solar cell cover glass and privacy glass, on the surface of which a pattern is transferred, a pattern-forming process and a glass-tempering process are separately performed in the related art. Accordingly, after the pattern is formed, the glass is required to be transported to the glass-tempering process and be subjected to reheating for the purpose of strengthening, resulting in drawbacks such as the loss of energy and time and complicated processing.

The information disclosed in this Background of the present invention section is only for the enhancement of understanding of the background of the present invention, and should not be taken as an acknowledgment or any form of suggestion that this information forms a prior art that would already be known to a person skilled in the art.

### BRIEF SUMMARY OF THE PRESENT INVENTION

The present invention provides an apparatus and a method for manufacturing patterned tempered glass, in which a pattern is formed on the surface of a heated glass substrate, and in which tempering is more completely realized by maximizing the difference in temperature between the inner and outer portions of the glass substrate and by rapid cooling.

Also provided are an apparatus and a method for manufacturing tempered glass, in which the amount of time that is required to manufacture the tempered glass can be decreased, and productivity can be increased.

According to the present invention, the method is defined in claim 1 and the apparatus is defined in claim 4.

In particular, the apparatus for manufacturing tempered glass includes a heating unit, which heats a glass substrate that is intended to be tempered, a pattern-forming unit, which forms a pattern on a surface of the glass substrate heated by the heating unit, and a cooling unit, which cools the glass substrate. The apparatus for manufacturing tempered glass also includes a dielectric heating unit, which increases the temperature of the inner portion of the glass substrate, on which the pattern is formed by the pattern-forming unit.

In an exemplary embodiment of the present invention, the apparatus for manufacturing tempered glass may also include a transportation unit, which includes an air supply section, which floats the glass substrate by supplying air upward from below.

According to the present invention, the apparatus for manufacturing tempered glass is implemented so as to include the heating unit, a pattern-forming unit, which forms a pattern on the surface of the glass substrate heated by the heating unit, a dielectric heating unit, and a cooling unit, which cools the glass substrate, the inside temperature of which is heated by the dielectric heating unit. Accordingly, the apparatus has advantageous effects in that tempering is more completely realized by maximizing the difference in temperature between the inner and outer portions of the glass substrate and by rapid cooling.

In addition, according to the present invention, the apparatus for manufacturing tempered glass is implemented so as to include the heating unit, the pattern-forming unit and the cooling unit, and thus can advantageously carry out surface patterning and glass tempering at the same time, thereby decreasing the amount of time to manufacture the tempered glass and increasing productivity.

The methods and apparatuses of the present invention have other features and advantages which will be apparent from, or are set forth in greater detail in the accompanying drawings, which are incorporated herein, and in the following Detailed Description of the present invention, which together serve to explain certain principles of the present invention.

### BRIEF DESCRIPTION OF THE DRAWINGS

FIG. 1 is an example view explaining an apparatus for manufacturing tempered glass according to an exemplary embodiment of the present invention;
FIG. 2 is an example view explaining the pattern-forming unit in the apparatus shown in FIG. 1;
FIG. 3 is a graph showing the results obtained by measuring the temperatures of the inside and the surface of a glass substrate according to process steps in an apparatus for manufacturing tempered glass according to an exemplary embodiment of the present invention; and
FIG. 4 is a flowchart showing a method for manufacturing tempered glass according to an exemplary embodiment of the present invention.

### DETAILED DESCRIPTION OF THE PRESENT INVENTION

Reference will now be made in detail to various embodiments of the present invention, examples of which are illustrated in the accompanying drawings and described below, so that a person having ordinary skill in the art to which the present invention relates can easily put the present invention into practice.

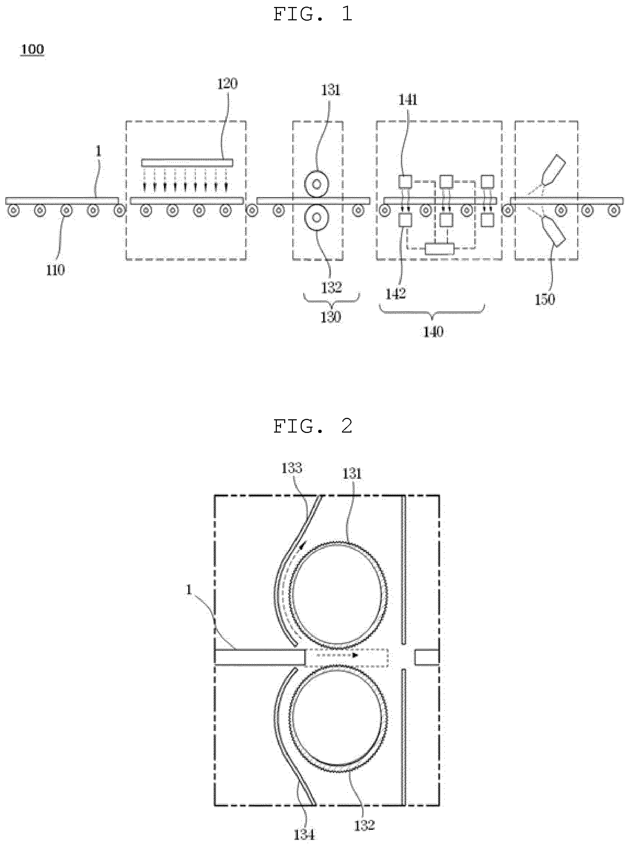

FIG. 1 is an example view explaining an apparatus for manufacturing tempered glass according to an exemplary embodiment of the present invention, and FIG. 2 is an example view explaining the pattern-forming section in the apparatus shown in FIG. 1.

As shown in FIG. 1, the apparatus for manufacturing tempered glass 100 of this embodiment generally includes a heating unit 120 (121, 122), a pattern-forming unit 130 and a cooling unit 150. The apparatus for manufacturing tempered glass 100 shown in FIG. 1 also includes a transportation unit 110 and a dielectric heating unit 140 (141, 142).

The transportation unit 110 transports the glass substrate 1 that is intended to be tempered. Although the transportation unit 110 is shown as including rollers in FIG. 1, this invention is not limited thereto. Alternatively, the apparatus for manufacturing tempered glass of the present invention can be implemented in such a fashion that it can transport the glass substrate 1 without contacting the surface of the glass substrate 1.

Glass transportation units using rollers have encountered problems in that the surface of the glass substrate 1 is damaged in the process in which the surface of the glass substrate 1 is brought into contact with the surfaces of the pattern-transferring rollers. As an example, when using the rollers to transport the glass substrate 1 in a high-temperature environment, such as in a heating chamber, the outer shape of the glass substrate 1 may be subjected to deformations, such as warping, sagging, scratches and wave-like grooves (called, "roller waves").

The transportation unit 110 may be implemented so as to include a substrate-floating section, which makes the glass substrate 1 float using air. The substrate-floating section may be implemented so as to include an air supply, which supplies air to the glass substrate.

The heating unit 120 heats the glass substrate 1, which is transported by the transportation unit 110. As an example, the heating unit can rapidly heat the glass substrate to a softening temperature or higher. When the heating unit 120 applies heat to the glass substrate 1, the temperature of the surface of the glass substrate becomes higher than that of the inside of the glass substrate. Accordingly, the surface of the glass substrate 1 is raised to a temperature at which the transfer of a pattern to the surface of the glass substrate is possible.

The heating unit 120 can be implemented as an infrared (IR) heater or an electrical heating element. The IR heater may be implemented, for example, as a near infrared (NIR) lamp or a mid-infrared (MIR) lamp. The NIR lamp is a lamp that dries an object by radiating only energy having effective wavelengths ranging from 0.8µm to 1.5µm. The NIR lamp transfers only IR radiation without heating the air. The MIR lamp is a high efficiency lamp that is used to dry film, glass, paint or the like, which is used for a plasma display panel (PDP), a liquid crystal display (LCD), a mobile phone, or the like. The MIR lamp has desirable drying time and efficiency.

Unlike the temperature control technique in the related art, the MIR lamp dries an object by radiating only energy having an effective wavelength from 2µm to 6µm, which a paint or product can efficiently absorb.

The pattern-forming unit 130 forms a pattern on the surface of the glass substrate 1 that is heated by the heating unit 120. In an example, as shown in FIG. 2, the pattern-forming unit 130 may implemented so as to include pattern transfer rollers 131 and 132, each of which has a pattern formed thereon, and screens 133 and 134. The screen 133 serves to block air from communicating between the heating unit 120 and the dielectric heating unit 140. In the patterning process, the temperatures of the surface and the inside of the glass substrate become uniform.

The dielectric heating unit 140 increases the temperature of the inside of the glass substrate 1. The dielectric heating unit 140 includes high-frequency electrodes 141 and 142. The dielectric heating unit can dielectrically heat the glass substrate using microwaves, radio waves, or the like.

The cooling unit 150 rapidly cools (500 ∼ 800 w/m2K) the glass substrate, the inside temperature of which is increased by the dielectric heating unit 140. As an example, the cooling unit 150 may be implemented so as to include an air compressor, which supplies cooled and compressed air, an air supply pipe, which guides the compressed air that is supplied from the air compressor to an ejector nozzle, a water mist producing section, which produces water mist, and a water mist supply pipe, which guides the water mist that is produced by the water mist producing section to the ejector nozzle. Here, the water mist producing section produces the water mist by removing water from a water tank by vibrating it using supersonic waves.

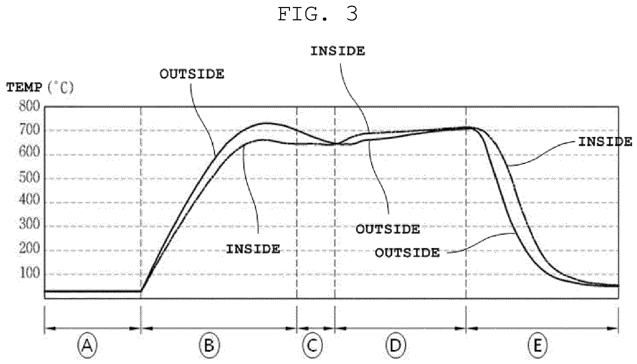

FIG. 3 is a graph showing the results obtained by measuring the temperatures of the inside and the surface of a glass substrate according to process steps in an apparatus for manufacturing tempered glass according to an exemplary embodiment of the present invention.

In FIG 3, "A" is the process step of loading a glass substrate, "B" is the process step of heating the glass substrate, "C" is the process step of forming a pattern in the glass substrate, "D" is the process step of performing high-frequency dielectric heating on the glass substrate, and "E" is the process step of rapidly cooling the glass substrate.

Referring to "B" and "C," the temperature of the outer portion of the glass substrate is higher than that of the inner portion of the glass substrate. That is, it can be appreciated that the surface of the glass substrate is raised to a temperature at which the transfer of a pattern to the surface of the glass substrate is possible. In contrast, referring to "D," i.e. the process step of performing high-frequency dielectric heating of the glass substrate, the temperature of the inner portion of the glass substrate is higher than that of the outer portion of the glass substrate. Accordingly, tempering can be more completely realized by maximizing the difference in the temperature between the inner and outer portions of the glass substrate, and by performing rapid cooling.

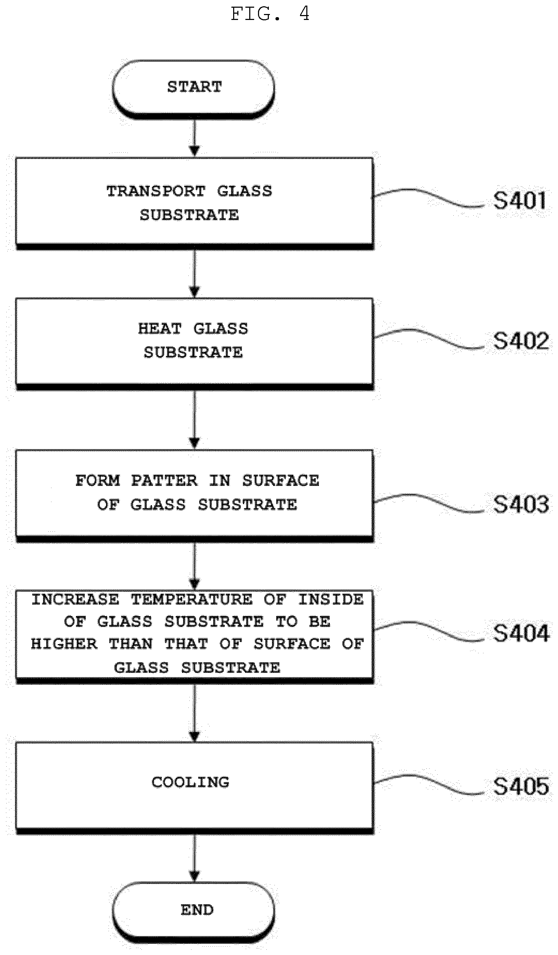

FIG. 4 is a flowchart showing a method for manufacturing tempered glass according to an exemplary embodiment of the present invention.

As shown in FIG. 4, in the method for manufacturing tempered glass of this embodiment, first, at S401, a loaded glass substrate is transported. The glass substrate may be transported by a contact technique, which uses, for example, transportation rollers or a conveyor belt, or by a noncontact technique, which transports the glass substrate up in the air.

Afterwards, at S402, the transported glass substrate is heated. When heat is applied to the glass substrate, the temperature of the surface of the glass substrate is higher than that of the inner portion of the glass substrate. Subsequently, the surface of the glass substrate is heated to a temperature at which pattern transfer to the surface of the glass substrate is possible. Heating the glass substrate can be implemented using an IR heater or an electrical heating element.

Afterwards, at S403, a pattern is formed on the surface of the heated glass substrate using a pattern transfer roller, which has a pattern formed on the surface thereof. Then, at S404, high-frequency dielectric heating is performed to increase the temperature of the inner portion of the glass substrate such that it is higher than that of the surface of the glass substrate. Afterwards, at S405, the glass substrate is quenched.

## Claims

1. A method for manufacturing patterned tempered glass, comprising sequentially:
heating (S402) a glass substrate;
forming (S403) a pattern on a surface of the glass substrate; and
quenching (S405) the glass substrate to temper the glass substrate wherein the method further comprises dielectrically heating (S404) the glass substrate between forming the pattern and quenching (S405) the glass substrate, and , wherein the dielectrically heating (S404) the heated glass substrate comprises performing high-frequency dielectric heating of the glass substrate so that a temperature of an inner portion of the glass substrate is increased to be higher than a temperature of the surface of the glass substrate.

2. The method of claim 1, comprising transporting (S401) the glass substrate up in the air.

3. The method of claim 1, wherein the heating (S402) the glass substrate comprises heating the glass substrate using an infrared heater or an electrical heating element.

4. An apparatus for manufacturing patterned tempered glass, comprising:
a heating unit (120) which heats a glass substrate (1);
a pattern-forming unit (130) which forms a pattern on a surface of the glass substrate (1) heated by the heating unit (120);
a dielectric heating unit (140) which heats the glass substrate (1) on which the pattern have been formed by the pattern-forming unit (130) and
a quenching unit (150) which quenches the glass substrate (1) which have been heated by the dielectric heating unit (140), to temper the glass substrate (1), wherein the dielectric heating unit (140) comprises a high-frequency dielectric heater which increases a temperature of an inner portion of the heated glass substrate to be higher than a temperature of the surface of the glass substrate, wherein the pattern-forming unit (130) comprises a screen which blocks air from communicating between the heating unit (120) and the dielectric heating unit (140).

5. The apparatus of claim 4, further comprising a transportation unit (110) which transports the glass substrate,
wherein the transportation unit (110) comprises a substrate-floating section which makes the glass substrate float up in the air.

6. The apparatus of claim 4, wherein the heating unit (120) comprises an infrared heater or an electrical heating element.

7. The apparatus of claim 4, wherein the pattern-forming unit (130) comprises a pattern transfer roller (131, 132) having a pattern thereon.

## Patentansprüche

1. Verfahren zur Herstellung von strukturiertem, gehärtetem Glas, umfassend aufeinanderfolgend:
Erhitzen (S402) eines Glassubstrates;
Ausbilden (S403) einer Struktur auf einer Oberfläche des Glassubstrates; und
Abschrecken (S405) des Glassubstrates, um das Glassubstrat zu härten, wobei das Verfahren ferner ein dielektrisches Erhitzen (S404) des Glassubstrates zwischen dem Ausbilden der Struktur und dem Abschrecken (S405) des Glassubstrates umfasst und wobei das dielektrische Erhitzen (S404) des erhitzten Glassubstrates die Durchführung eines dielektrischen Hochfrequenzerhitzens des Glassubstrates umfasst, sodass eine Temperatur eines inneren Abschnitts des Glassubstrates so erhöht wird, dass sie höher ist als eine Temperatur der Oberfläche des Glassubstrates.

2. Verfahren nach Anspruch 1, umfassend ein Transportieren (S401) des Glassubstrates in die Luft.

3. Verfahren nach Anspruch 1, wobei das Erhitzen (S402) des Glassubstrates ein Erhitzen des Glassubstrates mithilfe eines Infrarotheizgerätes oder eines elektrischen Heizelements umfasst.

4. Vorrichtung zur Herstellung von strukturiertem, gehärtetem Glas, umfassend:
eine Heizeinheit (120), die ein Glassubstrat (1) erhitzt;
eine Strukturausbildungseinheit (130) die eine Struktur auf einer durch die Heizeinheit (120) erhitzten Oberfläche des Glassubstrates (1) ausbildet,
eine dielektrische Heizeinheit (140), die das Glassubstrat (1), auf dem mithilfe der Strukturausbildungseinheit (130) die Struktur ausgebildet wurde, erhitzt, und
eine Abschreckungseinheit (150), die das Glassubstrat (1), das mithilfe der dielektrischen Heizeinheit (140) erhitzt wurde, abschreckt, um das Glassubstrat (1) zu härten, wobei die dielektrische Heizeinheit (140) ein dielektrisches Hochfrequenzheizgerät umfasst, das eine Temperatur eines inneren Abschnitts des erhitzten Glassubstrates so erhöht, dass sie höher ist als eine Temperatur der Oberfläche des Glassubstrates, wobei die Strukturausbildungseinheit (130) einen Schirm umfasst, der ein Strömen von Luft zwischen der Heizeinheit (120) und der dielektrischen Heizeinheit (140) verhindert.

5. Vorrichtung nach Anspruch 4, ferner umfassend eine Transporteinheit (110), die das Glassubstrat transportiert,
wobei die Transporteinheit (110) einen Substratsschwebeabschnitt umfasst, der das Glassubstrat in der Luft schweben lässt.

6. Vorrichtung nach Anspruch 4, wobei die Heizeinheit (120) ein Infrarotheizgerät oder ein elektrisches Heizelement umfasst.

7. Vorrichtung nach Anspruch 4, wobei die Strukturausbildungseinheit (130) eine Strukurübertragungswalze (131, 132) umfasst, die eine Struktur aufweist.

## Revendications

1. Procédé de fabrication de verre trempé modelé, comprenant successivement :
chauffer (S402) un substrat de verre ;
former (S403) un modèle sur une surface du substrat de verre ; et
refroidir (S405) le substrat de verre pour tremper le substrat de verre, le procédé comprenant en outre chauffer (S404) de façon diélectrique le substrat de verre entre la formation du modèle et le refroidissement (S405) du substrat de verre, et le chauffage diélectrique (S404) du substrat de verre chauffé comprenant réaliser un chauffage diélectrique à haute fréquence du substrat de verre de telle sorte qu'une température d'une partie intérieure du substrat de verre est augmentée pour qu'elle soit supérieure à une température de la surface du substrat de verre.

2. Procédé selon la revendication 1, comprenant transporter (S401) le substrat de verre en l'air.

3. Procédé selon la revendication 1, le chauffage (S402) du substrat de verre comprenant chauffer le substrat de verre en utilisant un chauffage infrarouge ou un élément de chauffage électrique.

4. Appareil pour la fabrication de verre trempé modelé, comprenant :
une unité de chauffage (120) qui chauffe un substrat de verre (1) ;
une unité formatrice de modèle (130), laquelle forme un modèle sur une surface du substrat de verre (1) chauffé par l'unité de chauffage (120) ;
une unité de chauffage diélectrique (140) qui chauffe le substrat de verre (1) sur lequel le modèle a été formé par l'unité formatrice de modèle (130) et
une unité de refroidissement (150), laquelle refroidit le substrat de verre (1) qui a été chauffé par l'unité de chauffage diélectrique (140) pour tremper le substrat de verre (1), l'unité de chauffage diélectrique (140) comprenant un chauffage diélectrique à haute fréquence qui augmente une température d'une partie intérieure du substrat de verre chauffé pour qu'elle soit supérieure à une température de la surface du substrat de verre, l'unité formatrice de modèle (130) comprenant un écran qui empêche la communication d'air entre l'unité de chauffage (120) et l'unité de chauffage diélectrique (140).

5. Appareil selon la revendication 4, comprenant en outre une unité de transport (110) qui transporte le substrat de verre,
l'unité de transport (110) comprenant une section de flottement pour substrat, qui fait flotter dans l'air le substrat de verre.

6. Appareil selon la revendication 4, l'unité de chauffage (120) comprenant un chauffage infrarouge ou un élément de chauffage électrique.

7. Appareil selon la revendication 4, l'unité formatrice de modèle (130) comprenant un rouleau de transfert de modèle (131, 132) comportant un modèle.
